# EUROPEAN PATENT SPECIFICATION

(11) **EP 3 112 714 B1**
(45) Date of publication and mention of the grant of the patent: **02.05.2018**
(21) Application number: 15754847.0
(22) Date of filing: 26.02.2015
(51) Int. Cl.: B23B 19/02, B23Q 11/12, F16C 19/54, F16C 35/12, F16C 37/00, H02K 5/16, H02K 5/173, H02K 5/20, H02K 9/19

(54) **SPINDLE DEVICE**
SPINDELVORRICHTUNG
DISPOSITIF BROCHE

(30) Priority: 28.02.2014 JP 2014039261; 27.08.2014 JP 2014173221
(43) Date of publication of application: 04.01.2017
(73) Proprietor: NSK Ltd., Tokyo 141-8560 (JP)
(72) Inventor: OGURI, Shoichiro, Fujisawa-shi Kanagawa 251-8501 (JP); KATSUNO, Yoshiaki, Fujisawa-shi Kanagawa 251-8501 (JP)
(74) Representative: Grünecker Patent- und Rechtsanwälte PartG mbB
(86) International application number: PCT/JP2015/055696
(87) International publication number: WO 2015/129823

(56) References cited:
- DE-A1-102012 008 209
- JP-A- H1 058 277
- JP-A- H1 058 277
- JP-A- H10 225 802
- JP-A- S61 121 802
- JP-A- 2000 317 754
- JP-A- 2007 245 286
- JP-A- 2009 133 483
- JP-A- 2010 221 360
- JP-U- S6 152 725
- US-A- 6 117 063

## Description

### TECHNICAL FIELD

The invention relates to a main spindle apparatus according to the preamble of claim 1. Such a main spindle apparatus is known from JP S61 121 802 A. More specifically, the invention relates to a main spindle apparatus of a high-speed rotary machine such as a machine tool main spindle, a high-speed motor, a centrifugal machine or a turbo refrigerator.

### BACKGROUND ART

Speedup of a machine tool main spindle has been developed remarkably and, as a lubricating method for enabling speedup of the main spindle, there is employed oil air lubrication or oil mist lubrication. Also, as other lubrication methods, from viewpoints of environmental protection, grease lubrication not discharging lubricating oil to the outside is reviewed and is employed together with a rolling bearing using a light ceramic (for example, silicon nitride) rolling element providing excellent seizure resistance in high speed rotation.

Also, as a method for driving a high-speed rotation main spindle, there is generally used a so called motor built-in main spindle with a motor built in a main spindle rather than gear driving, belt driving or direct driving using a coupling.

In the thus structured high-speed main spindle, in addition to generation of heat from a rolling bearing supporting the main spindle, the built-in motor (stator and rotor) also generates heat in large quantities. In the machine tool main spindle, when the temperature rise of the main spindle is high, the main spindle is thermally deformed to lower the working precision thereof. Therefore, in order to suppress the temperature rise of the main spindle, there is used a method for charging cooling oil into a housing serving as a main spindle metal pipe from outside. Since the deformation of the main spindle due to thermal expansion occurs in the axial direction with a front bearing providing a fixed side bearing as the original point thereof, mostly, the outer peripheries of the front bearing serving as the fixed side bearing and the stator of the motor are cooled.

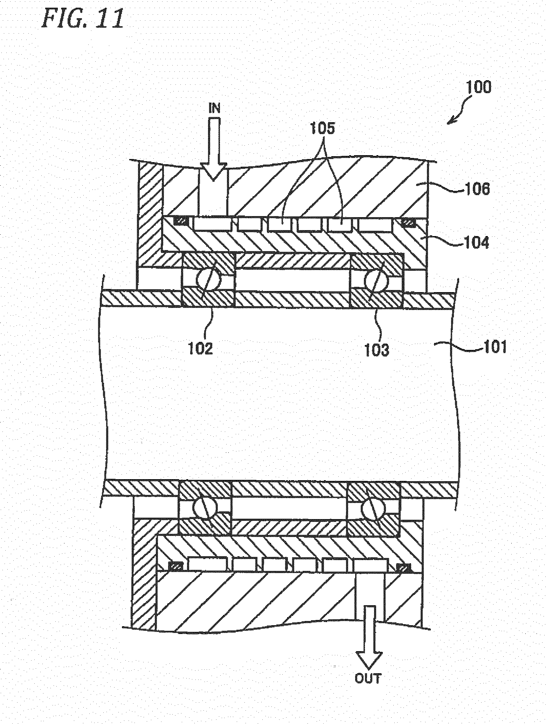

For example, in a conventional cooling apparatus 100 for suppressing generation of heat from the front bearing, as shown in Fig. 11, there are formed circumferential grooves 105 in the outer peripheral surface of a front housing 104 into which a pair of front bearings 102, 103 supporting the front side of a main spindle 101 are internally engaged. And, a cooling medium is circulated between the outer peripheral surface of the front housing 104 and the inner peripheral surface of the other housing 106, thereby cooling the front bearings 102, 103.

Also, the patent document 1 discloses, for use in a machine tool, a spindle cooling apparatus which includes a cooling medium passage formed in an inner ring spacer interposed between front and rear bearings and pressure feeds a cooling medium from a pump or the like to thereby cool the inner ring spacer.

Meanwhile, as the rear bearing serving as a free side bearing, there is often used a bearing (for example, a bearing having a bearing inside diameter dimension about φ10 - φ30mm smaller than the fixed side bearing) slightly smaller in size than the front bearing. Thus, the dmn value of the bearing is reduced and, accordingly, the temperature rise reduces. Also, the rear bearing serves as a free side bearing, and the thermal deformation of the main spindle rear part has a smaller influence on the working precision than the front bearing (for example, supposing a rotation shaft expands in the axial direction relative to a non-rotary part, even when the main spindle rear side slidingly moves backward, the main spindle front side for mounting a cutting tool thereon is hard to shift). For these reasons, in most cases, to the rear bearing, there is not added a cooling structure which provides a complicated structure.

### RELATED ART REFERENCE

### PATENT DOCUMENT

Patent Document: JP-A-H04-133555

### SUMMARY OF THE INVENTION

### PROBLEMS TO BE SOLVED BY THE INVENTION

In the recent high-speed main spindles, there has been increasing a type in which the dmn value of a bearing used is a million or more, or more than a million and five hundred thousand, or two millions or more; and, accordingly, the dmn value of a rear bearing also increases, thereby increasing heat generation. In the case that heat generation of the rear bearing is large, since the internal temperature of the bearing rises, the viscosity of lubricating oil lowers, thereby raising a fear that seizure can be generated due to poor oil film formation in a rolling contact portion or the like.

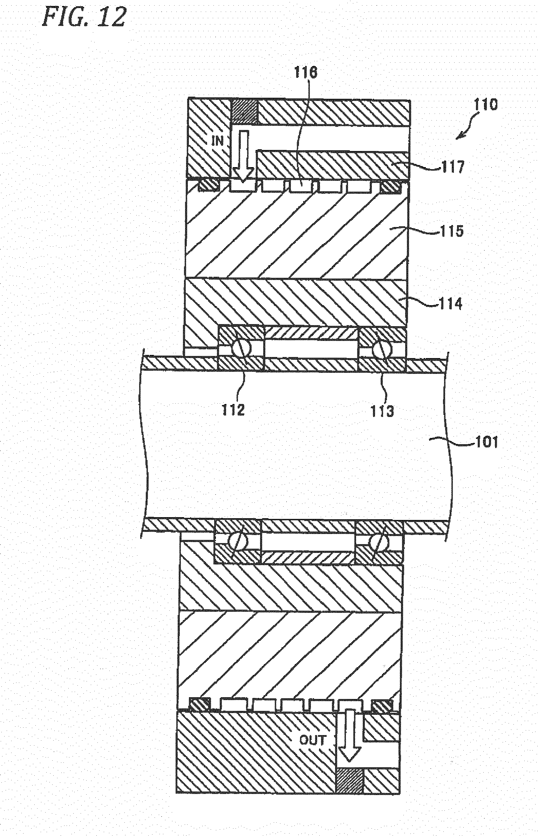

Therefore, in a cooling apparatus 110 shown in Fig. 12, while simplifying a peripheral structure, the rear bearing may be cooled. In this case, a sleeve 114, with which a pair of free side bearings 112, 113 supporting the rear side of a main shaft 101 are internally engaged, is internally engaged with a rear housing 115; and, in the outer peripheral surface of the rear housing 115, there is formed a circumferential groove 116. And, a cooling medium is circulated between the outer peripheral surface of the rear housing 115 and the inner peripheral surface of the other housing 117, thereby cooling the free side bearings 112, 113.

However, in the structure shown in Fig. 12, a cooling part is arranged at a position spaced in the radial direction from a heat generating part (bearings 112, 113), and heat transmission efficiency between the loose-engaged sleeve 114 and rear housing 115 is low, thereby resulting in low cooling efficiency. Therefore, although the rear housing is cooled, the sleeve is not cooled effectively to reduce a clearance between the rear housing and sleeve, thereby raising a fear of occurrence of poor slide. Thus, there is a possibility that heat expansion between the front bearing (fixed side bearing) and rear bearing (free side bearing) can generate a thrust load, thereby applying an excessive load to the bearings to damage them. Or, a pre-load loss can occur, thereby causing strange sounds or abnormal vibrations.

The invention is made in view of the above problems and thus has an object to provide a main spindle apparatus which can suppress a temperature rise caused by heat generation from a rear bearing with high efficiency and thus can extend the life of the rear bearing, that is, can extend the life of the main spindle apparatus and also can enhance working precision.

### MEANS FOR SOLVING THE PROBLEMS

The object of the invention can be attained by the following structures.
(1) A main spindle apparatus, including:
   a housing;
   a rotation shaft rotatable relative to the housing;
   a fixed side bearing having an inner ring externally engaged with one end side of the rotation shaft and an outer ring fixed to the housing;
   a sleeve arranged within the housing on the other end side of the rotation shaft and movable in the axial direction of the rotation shaft; and
   a free side bearing having an inner ring externally engaged with the other end side of the rotation shaft and an outer ring internally engaged with the sleeve, wherein:
      a cooling passage, allowing a cooling medium to flow therethrough, is formed between the outer peripheral surface of the sleeve and the inner peripheral surface of the housing, the outer and inner peripheral surfaces being opposed to each other; and
      the cooling passage includes multiple annular grooves formed in the outer peripheral surface of the sleeve or in the inner peripheral surface of the housing and arranged side by side in the axial direction, and a slit formed at least in one location between the mutually adjoining annular grooves to allow the grooves to communicate with each other.
(2) The main spindle apparatus according to (1), wherein:
   a supply port configured to supply the cooling medium is opened toward the annular groove situated on one end side in the axial direction; and
   a discharge port configured to discharge the cooling medium is opened toward the annular groove situated on the other end side in the axial direction.
(3) The main spindle apparatus according to (1) or (2), wherein
   annular elastic members, configured to seal liquid tight between the outer peripheral surface of the sleeve and the inner peripheral surface of the housing, are arranged on the axial-direction two sides of the cooling passage.
(4) The main spindle apparatus according to any one of (1) to (3), wherein
   chamfer parts are formed in the two end edges of the outer peripheral surface of the sleeve, or in the two end edges of the inner peripheral surface of the housing.
(5) The main spindle apparatus according to any one of (1) to (4), wherein
   the side wall surface of the annular groove is inclined relative to a direction perpendicular to the axial direction.

### ADVANTAGES OF THE INVENTION

According to the main spindle apparatus of the invention, between the mutually opposed surfaces (the outer peripheral surface of the sleeve and the inner peripheral surface of the housing), there is formed the cooling passage through which the cooling medium can flow; and, the cooling passage includes multiple annular grooves formed in the outer peripheral surface of the sleeve or in the inner peripheral surface of the housing and arranged side by side in the axial direction, and a slit formed at least one location between the mutually adjoining annular grooves and allowing the mutually adjoining annular grooves to communicate with each other. Therefore, the sleeve to be internally engaged by the bearing can be cooled directly, thereby enabling efficient cooling of the free side bearing. Thus, the internal temperature of the bearing lowers, lubrication oil film cut due to the reduced viscosity in the rolling contact part and in the cage guide surface during rotation is hard to occur, and life reduction and bearing seizure due to poor lubrication can be prevented. Also, since the housing and sleeve are cooled simultaneously, the radial-direction shrinkage amounts of these two members become uniform and thus a clearance in the slide part (a clearance between the housing and sleeve) is not reduced, thereby enabling prevention of occurrence of slide failures due to clearance shortage. Further, the flow of the cooling medium within the annular groove becomes smooth to cool the whole sleeve uniformly, thereby enabling prevention of occurrence of deformation distortion due to cooling. Consequently, distortion of the internally engaged bearing does not occur either and thus the rotation precision of the main spindle is maintained at a high level, thereby enabling enhancement in the working precision of the main spindle.

### BRIEF DESCRIPTION OF THE DRAWINGS

Fig. 1 is a section view of a first embodiment of a main spindle apparatus according to the invention.
Fig. 2 is an enlarged section view of the neighborhood of a free side bearing shown in Fig. 1.
Fig. 3 is a partial section view of the outer peripheral surface of a sleeve for explanation of an annular groove, corresponding to Fig. 2.
Fig. 4 is a section view of an annular groove.
Fig. 5A is a section view of an annular groove according to a modification.
Fig. 5B is a section view of an annular groove according to a modification.
Fig. 5C is a section view of an annular groove according to a modification.
Fig. 6 is a partially broken side view of a sleeve including two chamfer parts respectively formed in the two end edges of the outer peripheral surface thereof.
Fig. 7 is a partially broken side view of a sleeve including two chamfer parts respectively formed in the shoulder parts of the annular groove.
Fig. 8 is an enlarged section view of the neighborhood of the free side bearing according to a second embodiment of a main spindle apparatus of the invention.
Fig. 9 is a partial section view of the outer peripheral surface of a sleeve for explanation of an annular groove, corresponding to Fig. 8.
Fig. 11 is a section view of the structure of a conventional fixed side bearing.
Fig. 12 is a section view of the structure of a conventional free side bearing.

### MODES FOR CARRYING OUT THE INVENTION

Description is given below specifically of embodiments of a main spindle apparatus according to the invention with reference to the drawings.

### (First Embodiment)

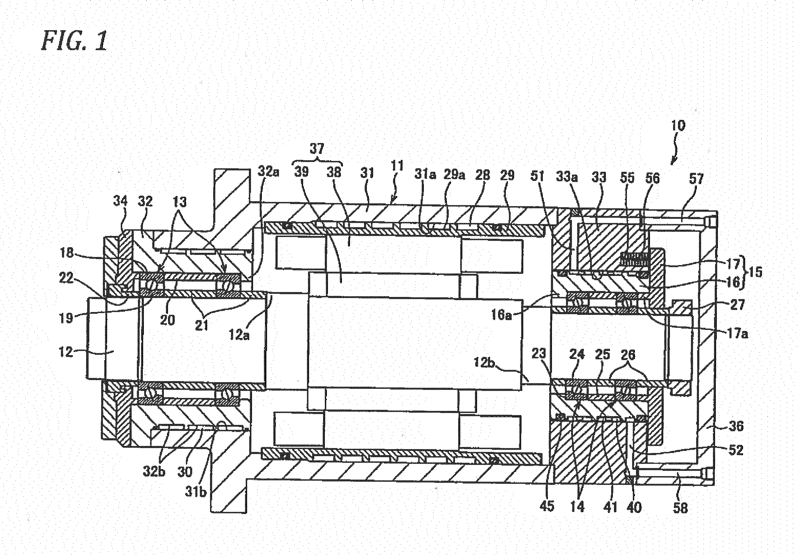

Firstly, description is given of the whole structure of a main spindle apparatus according to a first embodiment of the invention with reference to Fig. 1.

A main spindle apparatus 10 includes a housing 11, a rotation shaft 12 having a tool (not shown) mounted on one end (in Fig. 1, the left end) thereof and rotatable relative to the housing 11, a pair of fixed side bearings (in this embodiment, angular ball bearings) 13, 13 arranged on the front end side (in Fig. 1, the left side) of the rotation shaft 12, a pair of free side bearings (in this embodiment, angular ball bearings) 14, 14 arranged on the rear end side (in Fig. 1, the right side) of the rotation shaft 12, and a sleeve 15 inserted into the housing 11 and slidingly movable in the axial direction.

The housing 11 includes a substantially cylindrical housing main body 31, a front housing 32 engagingly fixed to the front end side of the housing main body 31, and a rear housing 33 engagingly fixed to the rear end side of the housing main body 31. A front cover 34 is fastened and fixed to the front end of the front housing 32, while a rear cover 36 is fastened and fixed to the rear end of the rear housing 33.

A stator 38 of a built-in motor 37 is fixed to a sleeve 29 internally engageable with the inner peripheral surface 31a of the housing main body 31. A rotor 39 is fixed to the axial-direction intermediate part of the rotation shaft 12 while it is opposed to the stator 38. A rotation magnetic field generated by the stator 38 applies a rotation force to the rotor 39, thereby rotationally driving the rotation shaft 12. The sleeve 29 has multiple annular grooves 29a in the outer peripheral surface thereof and, when the sleeve 29 is internally engaged with the housing main body 31, cooling passages 28 are formed between the grooves 29a and inner peripheral surface 31a.

While outer rings 18, 18 are internally engaged with the front housing 32 and inner rings 19, 19 are externally engaged with the rotation shaft 12, the fixed side bearings 13, 13 bear the front end side of the rotation shaft 12 rotatably. The outer rings 18, 18 of the fixed side bearings 13, 13, while being held by the step part 32a of the front housing 32 and front cover 34 through an outer ring spacer 20, are positioned in the axial direction relative to the front housing 32. The inner rings 19, 19, while being held by the front step part 12a of the rotation shaft 12 and a nut 22 threadedly engaged with the rotation shaft 12 through an inner ring spacer 21, are positioned in the axial direction relative to the rotation shaft 12. The front housing 32 has multiple annular grooves in the outer peripheral surface thereof and, when the front housing 32 is internally engaged with the housing main body 31, there are formed cooling passages 30 between the grooves 32b and the inner peripheral surface 31b of the housing main body 31.

The inner peripheral surface 33a of the rear housing 33 is engaged by a substantially cylindrical bearing sleeve 16 movable in the axial direction. Also, on such end face of the bearing sleeve 16 as is opposed to a tool mounting side thereof, there is mounted by a screw (not shown) an outer ring retainer 17 extending outward in the radial direction from the outer peripheral surface of the bearing sleeve 16. Here, the bearing sleeve 16 and outer ring retainer 17 constitute the sleeve 15.

The rear housing 33 includes multiple spring chambers 55 respectively opened in the counter-tool-side end face thereof (in Fig. 1, the right side face), while they are opposed to the tool side end face of the flange part of the outer ring retainer 17 extending outward in the radial direction from the bearing sleeve 16. A coil spring 56 is stored into the spring chamber 55 and is interposed between the flange part of the outer ring retainer 17 and spring chamber 55. The coil spring 56 applies an axial direction (in Fig. 1, in the right direction) elastic force to the sleeve 15, thereby applying a fixed pressure preload to the fixed side bearings 13, 13 and free side bearings 14, 14.

While outer rings 23, 23 are internally engaged with the bearing sleeve 16 and inner rings 24, 24 are externally engaged with the rotation shaft 12, the free side bearings 14, 14 bear the rear end side of the rotation shaft 12 rotatably. The outer rings 23, 23 of the free side bearings 14, 14, while being held by the step part 16a of the bearing sleeve 16 and the annular projection part 17a of the outer ring retainer 17 through an outer ring spacer 25, are positioned in the axial direction relative to the bearing sleeve 16. The inner rings 24, 24, while being held by the rear step part 12b of the rotation shaft 12 and a nut 27 threadedly engaged with the rotation shaft 12 through an inner ring spacer 26, are positioned in the axial direction relative to the rotation shaft 12.

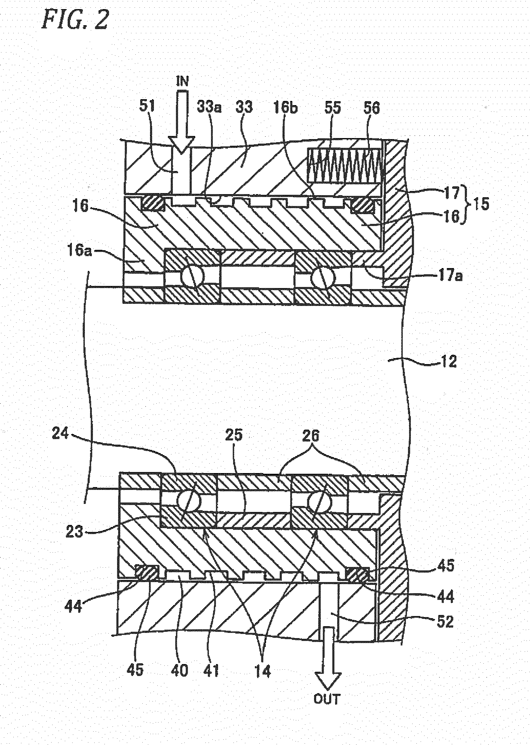

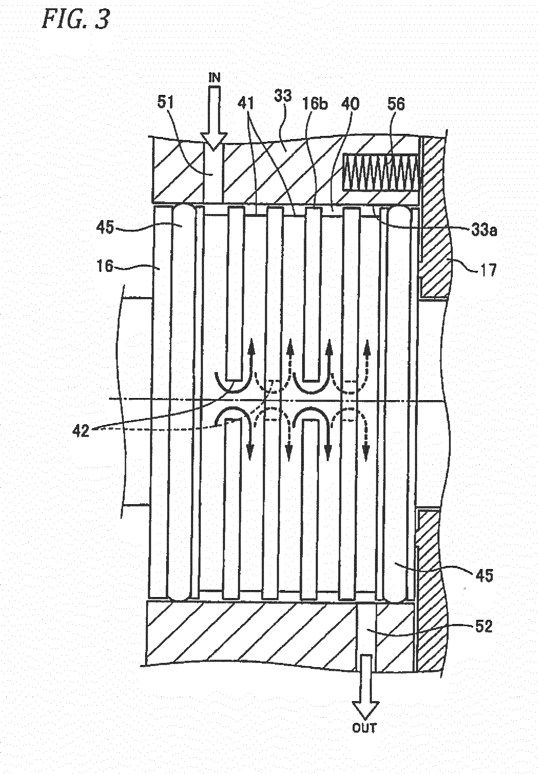

As shown in Figs. 2 and 3, the bearing sleeve 16 includes in the outer peripheral surface 16b thereof multiple annular grooves 41 arranged side by side in the axial direction. Between mutually adjoining annular grooves 41, there are formed slits 42 along the axial direction to allow the mutually adjoining annular grooves 41 to communicate with each other. The slits 42 may preferably be arranged alternately 180° out of phase with each other. When the bearing sleeve 16 is engaged with the inner peripheral surface 33a of the rear housing 33, there is formed a cooling passage 40 between the mutually opposed surfaces (the outer peripheral surface of the bearing sleeve 16 and the inner peripheral surface 33a of the rear housing 33). A cooling medium such as cooling oil or the like flows in the cooling passage 40. The 180° different phases of the slits 42 reduce stagnation of the cooling medium within the annular groove 41, thereby enabling uniform flow of the cooling medium. Here, the phase of the slit 42 is not limited to 180° but there may be set an arbitrary phase so long as it enables smooth flow of the cooling medium.

Also, the supply port 51 of the supply passage 57 for supplying the cooling medium of the cooling passage 40 is opened toward the annular groove 41 situated nearest to the built-in motor 37, while the discharge port 52 of the discharge passage 58 for discharging the cooling medium is opened toward the annular groove most distant from the built-in motor 37. And, the cooling medium pressure fed from a pump (not shown) is supplied from the supply port 51 and flows in the cooling passage 40 to cool it and, after then, is discharged from the discharge port 52. Since the cooling medium is supplied from the annular groove 41 near to the built-in motor 37, a part generating a large amount of heat, that is, a part easy to increase in temperature can be cooled by the cooling medium of a further lower temperature, thereby enabling efficient cooling. Also, since the supply port 51 and discharge port 52 are arranged 180° out of phase with each other, the cooling passage 40 provided a symmetrical arrangement, thereby enabling uniform cooling. Here, a phase difference between the supply port 51 and discharge port 52 can be changed arbitrarily according to the arrangement of peripheral parts, for example, the same phase may also be employed.

Also, in this embodiment, the supply port 51 and discharge port 52 are formed 90° out of phase with the slit 42 but the phase difference with respect to the slit 42 can also be changed arbitrarily, for example, the same phase as the slit 42 may also be employed.

Also, the bearing sleeve 16 includes in the outer peripheral surface 16b thereof a pair of annular concave grooves 44 formed outwardly of the cooling passage 40 in the axial direction. An O ring 45 made of an elastic member is mounted in each annular concave groove 44, thereby sealing the engagement part between the inner peripheral surface 33a of the rear housing 33 and bearing sleeve 16. The crushing margin of the O ring 45 may preferably be in the range of 0.1 mm - 2.0 mm and, for easier removal of the sliding failure of the bearing sleeve, in the range of 0.2 mm ∼ 0.5 mm. Also, for the engagement clearance between the bearing sleeve 16 and rear housing 33, a difference between the diameter dimensions thereof, that is, a dimension expressed by [inside diameter of rear housing 33 - outside diameter of bearing sleeve 16] may preferably be set in the range of 5 µm ∼ 100 µm and, for easier removal of the sliding failure caused by short clearance or inclination of the bearing sleeve 16, in the range of 15 µm ∼ 50 µm.

As the material of the O ring 45, in addition to ordinary material such as nitrile rubber or acrylic rubber, silicon rubber and various elastomers having heat resistance corresponding to generation of heat of the motor-built-in spindle, or fluororubber having swelling resistance and oil resistance corresponding to the cooling medium are selected as needed. Here, the sliding amount of the bearing sleeve 16 and rear housing 33 in this embodiment is such degree of displacement amount as can escape from the deformation caused by the working load and the thermal axial-direction expansion of the spindle and is thus ±0.5 mm or less, at most, ±1 mm or less. Therefore, there may preferably be selected a material which hardly incurs degradation of seal performance owing to sliding wear caused by such large and quick strokes as can be seen in a piston ring to be mounted on the movable part, and has an excellent creep resistance characteristic against aging change (heat and initial interference engagement).

As shown in Fig. 1, when the main spindle apparatus 10 includes multiple cooling passages such as a cooling passage 30 for cooling the fixed side bearings 13, 13, a cooling passage 28 for cooling the stator 38 of the built-in motor 37, and a cooling passage 40 for cooling the free side bearings 14, 14, as an optimum cooling system for the free side bearings 14, 14, preferably, a cooling apparatus (not shown) may be provided separately from other cooling passages 28 and 30, that is, may be provided independently for the cooling passage 40. Thus, the temperature adjustment of the cooling medium can be made without being influenced by the conditions of other cooling passages 28 and 30.

However, in a practically difficult case, the cooling apparatus may not be made independent but only the cooling passage 40 may be provided independently. In this case, a restrictor may be provided somewhere in a supply side pipe to the cooling passage 40 to control the supply amount of the cooling medium, thereby enabling adjustment for the optimum cooling condition.

Here, in the case of a one-passage cooling structure, when a cooling medium is first passed through the cooling passage 38 for cooling the stator 38 having a tendency to generate a large amount of heat and is then circulated to the cooling passage 40 for cooling the free side bearings 14, 14, the temperature of the whole main spindle apparatus 10 can be lowered further efficiently. Also, to cool the temperature of the free side bearings 14, 14 further efficiently, with the above passage structure reversed, the cooling medium of a lower temperature may be first circulated to the cooling passage 40. That is, the sequence of the circulation of the cooling medium can be selected as needed.

As described above, according to the main spindle apparatus 10 of this embodiment, between the outer peripheral surface 16b of the bearing sleeve 16 and the inner peripheral surface 33a of the rear housing 33, there is formed the cooling passage 40 through which the cooling medium can flow; and, the cooling passage 40 includes multiple annular grooves 41 formed in the outer peripheral surface 16b of the bearing sleeve 16 and arranged side by side in the axial direction, and slits 42 formed at least in one location between the mutually adjoining annular grooves 41 for allowing them to communicate with each other. Thus, the bearing sleeve 16 to be internally engaged by the free side bearings 14, 14 can be cooled directly, thereby enabling efficient cooling of the free side bearings 14, 14. Accordingly, the internal temperature of the free side bearings 14, 14 is lowered, lubricating oil film cut due to the lowered viscosity in the rolling contact part and cage guide surface during rotation is hard to occur, and the reduced life due to poor lubrication and the seizure of the free side bearings 14, 14 can be prevented.

Also, since the rear housing 33 and bearing sleeve 16 are cooled simultaneously, the radial shrinkage quantities of these two members become uniform and thus the clearance in the slide part (clearance between the rear housing 33 and bearing sleeve 16) is not reduced, whereby occurrence of slide failures due to short clearance can be prevented. Further, the flow of the cooling medium within the annular groove 41 becomes smooth to cool the whole bearing sleeve 16 uniformly, thereby preventing occurrence of deformation distortion due to cooling. As a result, the internally engaged free side bearings 14, 14 are prevented against distortion, and the rotation of the rotation shaft 12 can be maintained with high precision, thereby enabling enhancement in the working precision of the main spindle apparatus 10.

Also, since cooling oil is always circulating in the slide part, the friction coefficient thereof is small, thereby enabling further enhancement in the slide performance. There is a method for arranging a ball guide (ball bush) or the like in the slide part to thereby enhance the slide performance due to the sliding action thereof. However, in this method, since the rigidity is lowered, there are raised troubles such as occurrence of vibrations and reduction in the characteristic frequency of the spindle. Meanwhile, when, for enhancing the rigidity, a preload clearance (that is, a clearance between housing inside diameter, ball and sleeve outside diameter) is increased, adversely, the slide performance is worsened than when it slides according to its own slide property.

Also, even when initial-stage fletching friction powder is generated between the rear housing 33 and bearing sleeve 16 due to chatter vibration occurring during heavy cutting, the cooling medium carries away slight friction powder to the outside, thereby enabling suppression of further progress of fletching with the friction powder serving as an aid.

Also, since the supply port 51 for supplying the cooling medium is opened toward the annular groove 41 situated on one end side in the axial direction and the discharge port 52 for discharging the cooling medium is opened toward the annular groove 41 situated on the other end side in the axial direction, the flow of the cooling medium within the annular groove 41 becomes smooth, thereby enabling uniform cooling of the whole bearing sleeve 16. Thus, the high rotation precision can be maintained.

Further, since the O rings 45 for sealing liquid tight between the outer peripheral surface 16b of the bearing sleeve 16 and the inner peripheral surface 33a of the rear housing 33 are arranged on both sides of the cooling passage 40 in the axial direction, the cooling medium is prevented against leakage and the damping characteristic of the main spindle apparatus 10 is enhanced by the elasticity of the O rings 45, thereby, particularly, contributing toward enhancing dynamic rigidity having an influence on the working characteristic of a hard-to-be-cut material. Also, there is obtained a damping action due to the damper effect of the cooling medium flowing in the slide part.

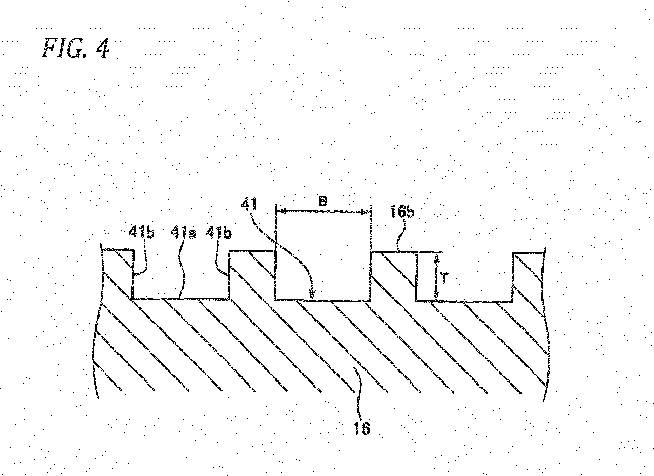

Here, in the above embodiment, the annular groove 41, as shown in Fig. 4, is formed to have a rectangular section shape provided by a bottom surface 41a and side wall surfaces 41b. The sizes of the groove width B and depth T of the annular groove 41 having a rectangular section shape can be selected properly.

When B>T, since the radial depth of the annular groove 41 is shallow, the radial thickness of the bearing sleeve 16 can be secured, thereby enabling enhancement in the sleeve rigidity. Such shape is applied to a case where a serious consideration is laid on the working precision enhancement of the sleeve or a case where the rigidity of the main spindle must be enhanced. Also, when B<T, since the radial depth of the annular groove 41 is deep, the annular groove 41 is formed near to the bearing and thus the bearing neighborhood can be cooled more effectively, thereby enabling enhancement in cooling efficiency. Such shape can be applied to a case where a serious consideration is laid on enhancement in the cooling performance of the main spindle. When B=T, the above effects can be obtained in good balance.

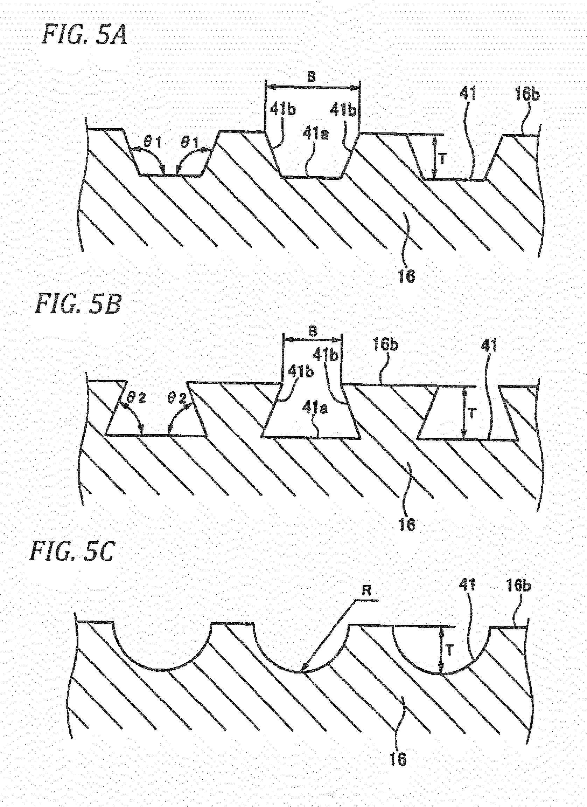

Also, the section shape of the annular groove 41 can include, besides the rectangular shape, various shapes as shown in Figs. 5A ∼ 5C. For example, as shown in Figs. 5A and 5B, the side wall surface 41b of the annular groove 41 may also be formed inclined relative to a direction perpendicular to the axial direction, that is, the radial direction.

Specifically, the annular groove 41 of the bearing sleeve 16 shown in Fig. 5A is a trapezoidal groove in which the groove width B increases gradually toward the outer peripheral surface 16b of the bearing sleeve 16. That is, in the trapezoidal annular groove 41, since the section shape of the annular groove 41 provides an obtuse angle (θ₁) between the bottom surface 41a and side wall surface 41b, it has no interference with the inner peripheral surface 33a of the rear housing 33 (see Fig. 1), thereby enabling enhancement in the sliding property. Also, in the annular groove 41 of the bearing sleeve 16 shown in Fig. 5B, the groove width B reduces gradually toward the outer peripheral surface 16b of the bearing sleeve 16, thereby providing a so called dovetail groove. That is, in the dovetail annular groove 41, since the section shape of the annular groove 41 provides an acute angle (θ₂) between the bottom surface 41a and side wall surface 41b, the surface area of the neighborhood of the free side bearings 14, 14 (see Fig. 1) serving as the heat generation source is large and thus the heat of the free side bearings 14, 14 can be efficiently transmitted to the cooling medium, thereby enabling enhancement in the cooling performance.

Also, the annular groove 41 of the bearing sleeve 16 shown in Fig. 5C provides a semicircular section shape of a radius of curvature R. Therefore, it can be worked by a round-shaped tool and the working wear of the tool is small, thereby enabling enhancement in workability.

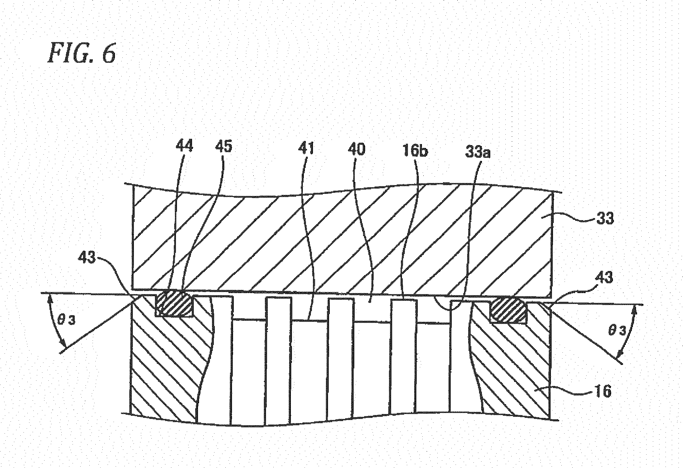

Also, in both end edges of the outer peripheral surface 16b of the bearing sleeve 16, as shown in Fig. 6, there may also be formed chamfer parts 43. The angle θ₃ of the chamfer part 43 relative to the outer peripheral surface 16b, preferably, may be 3° ∼ 45°, more preferably, 3° ∼ 30°. Thus, even when the bearing sleeve 16 is inclined within the rear housing 33, it is prevented against interference with the inner peripheral surface 33a of the rear housing 33, thereby securing the sliding property.

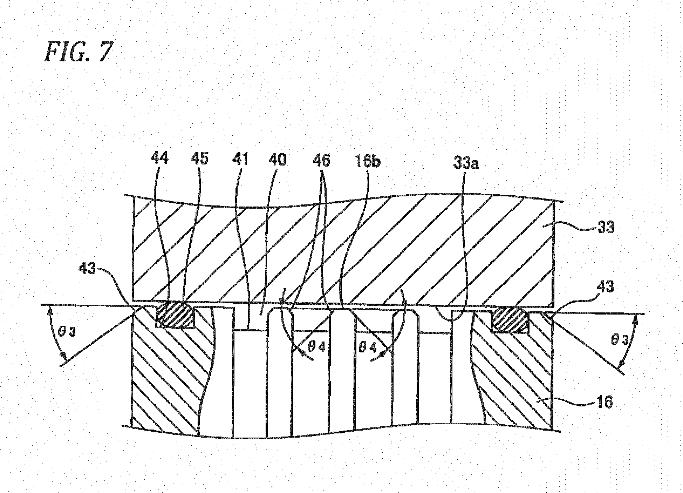

Also, as shown in Fig. 7, when, in addition to the chamfer parts 43 in the two end edges of the bearing sleeve 16, chamfer parts 46 are formed in the shoulder parts of the annular groove 41, the sleeve is further prevented against interference with the inner peripheral surface 33a of the rear housing 33, thereby maintaining the sliding property. The chamfer angle θ₄ of the shoulder part 43 of the annular groove 41, preferably, may be 3° ∼ 45°, more preferably, 3° ∼ 30°.

### (Second Embodiment)

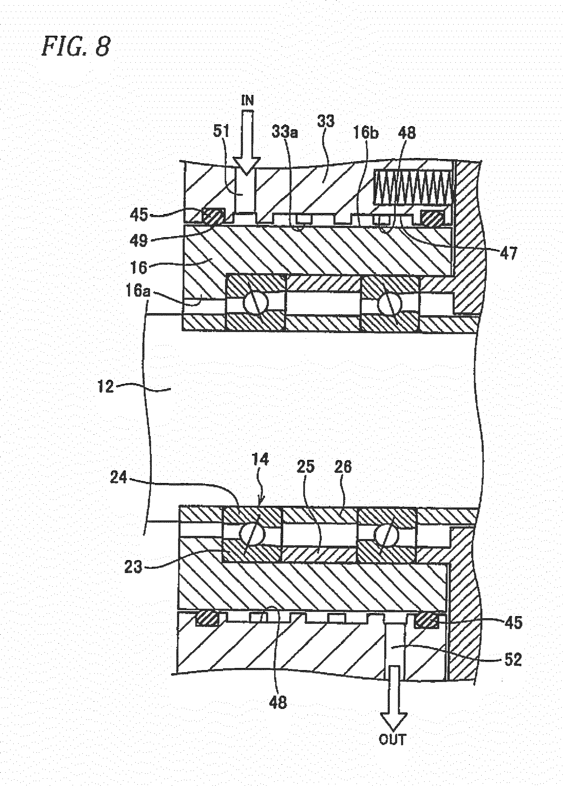

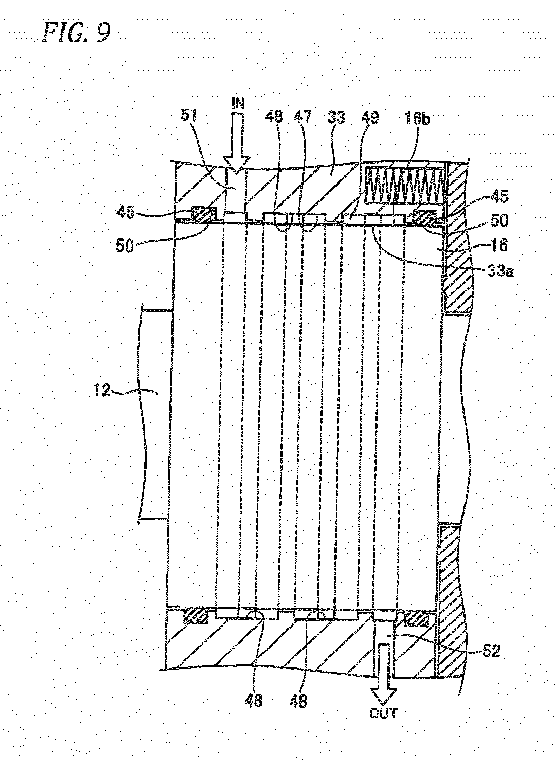

Next, description is given of a second embodiment of a main spindle apparatus according to the invention with reference to Figs. 8 and 9. Here, since the main spindle apparatus of this embodiment is similar to the first embodiment except that an annular groove is formed in the inner peripheral surface of a rear housing, the same or equivalent parts thereof to the first embodiment are given the same designations in the drawings and thus the description thereof is omitted or simplified. Also, only the free side bearing neighborhood is illustrated and described.

As shown in Figs. 8 and 9, the rear housing 33 includes in the inner peripheral surface 33a thereof multiple annular grooves 47 arranged side by side in the axial direction. Between the mutually adjoining annular grooves 47, there are formed slits 48 in the axial direction to allow the grooves to communicate with each other. The slits 48 may preferably be arranged alternately 180° out of phase with each other. The annular grooves 47 and slits 48, when the bearing sleeve 16 is engaged with the inner peripheral surface 33a of the rear housing 33, form a cooling passage 49 between the inner peripheral surface 33a and the outer peripheral surface 16a of the bearing sleeve 16 through which a cooling medium can flow.

Here, although the supply port 51 and discharge port 52 are formed in phase with any one of the slits 42, in this embodiment as well, the phase difference with respect to the slits 42 can be set arbitrarily.

Also, the rear housing 33 includes in the inner peripheral surfaces 33a thereof a pair of annular concave grooves 50 existing outwardly of the cooling passage 49 in the axial direction. An O ring made of an elastic member is mounted in each annular concave groove 50, thereby sealing the engaged part between the inner peripheral surfaces 33a of the rear housing 33 and bearing sleeve 16.

Thus, in the main spindle apparatus 10 of this embodiment as well, between the outer peripheral surface 16a of the bearing sleeve 16 and the inner peripheral surfaces 33a of the rear housing 33, there is formed the cooling passage 49 through which the cooling medium can flow. The cooling passage 49 includes multiple annular grooves 47 formed in the inner peripheral surfaces 33a of the rear housing 33 and arranged side by side in the axial direction, and a slit 48 formed at least in one location between the mutually adjoining annular grooves 47 to allow them to communicate with each other. Thus, this embodiment can provide similar effects to the first embodiment.

The remaining structures and operation effects of this embodiment are also similar to the first embodiment.

Here, in this embodiment as well, the section shape of the annular groove 47 and the shapes of the two end edges of the inner peripheral surface 33a of the rear housing 33 can be applied similarly to the section shape of the annular groove 41 and the shapes of the two end edges of the outer peripheral surface 16b of the bearing sleeve 16 of the first embodiment.

That is, chamfer parts may also be formed in the two end edges of the inner peripheral surface 33a of the rear housing 33, and the side wall surfaces of the multiple annular grooves 47 may also be inclined relative to a direction perpendicular to the axial direction.

Here, the invention is not limited to the above respective embodiments but can be changed or improved properly.

For example, in the above embodiments, description has been given of the main spindle apparatus in which a preload is applied between the fixed side and free side bearings using a fixed pressure preload. However, this is not limitative but the invention can also be applied to a main spindle apparatus in which fixed-position preloads are applied respectively to the fixed side and free side bearings, while providing similar effects. Therefore, the free side bearings are not limited to the angular ball bearings but other rolling bearings such as cylindrical roller bearings may also be applied.

### DESCRIPTION OF REFERENCE NUMERALS AND SIGNS

10: Main spindle apparatus
11: Housing
12: Rotation shaft
13: Fixed side bearing
14: Free side bearing
16: Bearing sleeve (sleeve)
16b: Outer peripheral surface of sleeve
18, 23: Outer ring
19, 24: Inner ring
28, 30, 40, 49: Cooling passage
31: Housing main body
32: Front housing
33: Rear housing (housing)
33a: Inner peripheral surface of housing
41, 47; Annular groove
42: Slit
43: Chamfer part
45: O ring (elastic member)
51: Supply port
52: Discharge port

## Claims

1. A main spindle apparatus (10), comprising:
a housing (11);
a rotation shaft (12) rotatable relative to the housing (11);
a fixed side bearing (13) having an inner ring (19) externally engaged with one end side of the rotation shaft (12) and an outer ring (18) fixed to the housing (11);
a sleeve (16) arranged within the housing (11) on the other end side of the rotation shaft (12) and movable in the axial direction of the rotation shaft (12); and
a free side bearing (14) having an inner ring (24) externally engaged with the other end side of the rotation shaft (12) and an outer ring (23) internally engaged with the sleeve (16), **characterized in that**
a cooling passage (40), allowing a cooling medium to flow therethrough, is formed between the outer peripheral surface (16b) of the sleeve (16) and the inner peripheral surface (33a) of the housing (11), the outer and inner peripheral surfaces (16b, 33a) being opposed to each other; and **in that**
the cooling passage (40) includes multiple annular grooves (41) formed in the outer peripheral surface (16b) of the sleeve (16) or in the inner peripheral surface (33a) of the housing (11) and arranged side by side in the axial direction, and a slit (42) formed at least in one location between the mutually adjoining annular grooves (41) to allow the grooves (41) to communicate with each other.

2. The main spindle apparatus (10) according to Claim 1,**characterized in that**
a supply port (51) configured to supply the cooling medium is opened toward the annular groove (41) situated on one end side in the axial direction; and
a discharge port (52) configured to discharge the cooling medium is opened toward the annular groove (41) situated on the other end side in the axial direction.

3. The main spindle apparatus (10) according to Claim 1 or 2, **characterized in that**
annular elastic members (45), configured to seal liquid tight between the outer peripheral surface of the sleeve (16) and the inner peripheral surface of the housing (11), are arranged on the axial-direction two sides of the cooling passage (40).

4. The main spindle apparatus according to any one of Claims 1 to 3, **characterized in that**
chamfer parts (43) are formed in the two end edges of the outer peripheral surface (16b) of the sleeve (16), or in the two end edges of the inner peripheral surface (33a) of the housing (11).

5. The main spindle apparatus (10) according to any one of Claims 1 to 4, **characterized in that**
the side wall surface of the annular groove (41) is inclined relative to a direction perpendicular to the axial direction.

## Patentansprüche

1. Hauptspindelvorrichtung (10), umfassend:
ein Gehäuse (11);
eine relativ zu dem Gehäuse (11) rotierbare Rotationswelle (12);
ein Lager (13) auf der feststehenden Seite mit einem Innenring (19), der von außen mit der einen Abschlussseite der Rotationswelle (12) in Eingriff gebracht ist, und einem an dem Gehäuse (11) befestigten Außenring (18);
eine Buchse (16), die in dem Gehäuse (11) auf der anderen Abschlussseite der Rotationswelle (12) angeordnet ist und in der axialen Richtung der Rotationswelle (12) bewegbar ist; und
ein Lager (14) auf der freien Seite mit einem Innenring (24), der von außen mit der anderen Abschlussseite der Rotationswelle (12) in Eingriff gebracht ist, und einem Außenring (23), der von innen mit der Buchse (16) in Eingriff gebracht ist,
**dadurch gekennzeichnet, dass**
ein Kühlkanal (40), durch den ein Kühlmedium hindurch strömen kann, zwischen der äußeren Umfangsfläche (16b) der Buchse (16) und der inneren Umfangsfläche (33a) des Gehäuses (11) gebildet ist, wobei die äußeren und inneren Umfangsflächen (16b, 33a) einander gegenüberliegen; und **dadurch**, dass der Kühlkanal (40) mehrfache ringförmige Rillen (41), die in der äußeren Umfangsfläche (16b) der Buchse (16) oder in der inneren Umfangsfläche (33a) des Gehäuses (11) ausgebildet und nebeneinander in axialer Richtung angeordnet sind, und einen Schlitz (42) enthält, der mindestens an einer Stelle zwischen den wechselweise angrenzenden, ringförmigen Rillen (41) ausgebildet ist, so dass die Rillen (41) miteinander in Verbindung stehen können.

2. Hauptspindelvorrichtung (10) nach Anspruch 1, **dadurch gekennzeichnet, dass**
eine zum Zuführen des Kühlmediums gestaltete Zuführöffnung (51) zu der ringförmigen Rille (41) hin, die sich an einer Abschlussseite in der axialen Richtung befindet, geöffnet ist; und
eine zum Auslassen des Kühlmediums gestaltete Austrittsöffnung (52) zu der ringförmigen Rille (41) hin, die sich auf der anderen Abschlussseite in der axialen Richtung befindet, geöffnet ist.

3. Hauptspindelvorrichtung (10) nach Anspruch 1 oder 2,
**dadurch gekennzeichnet, dass**
ringförmige elastische Elemente (45), die gestaltet sind, um flüssigkeitsdicht zwischen der äußeren Umfangsfläche der Buchse (16) und der inneren Umfangsfläche des Gehäuses (11) abzudichten, auf den beiden Seiten in axialer Richtung des Kühlkanals (40) angeordnet sind.

4. Hauptspindelvorrichtung nach einem der Ansprüche 1 bis 3,
**dadurch gekennzeichnet, dass**
abgeschrägte Teile (43) in den zwei Endkanten der äußeren Umfangfläche (16b) der Buchse (16) oder in den zwei Endkanten der inneren Umfangfläche (33a) des Gehäuses (11) ausgebildet sind.

5. Hauptspindelvorrichtung (10) nach einem der Ansprüche 1 bis 4,
**dadurch gekennzeichnet, dass**
die seitliche Wandfläche der ringförmigen Rille (41) relativ zu einer Richtung senkrecht zur axialen Richtung geneigt ist.

## Revendications

1. Appareil formant broche principale (10) comprenant :
une enveloppe (11),
un arbre de rotation (12) tournant par rapport à l'enveloppe (11),
un palier de côté fixe (13) possédant une bague interne (19) en prise externe avec une première terminaison de l'arbre de rotation (12), ainsi qu'une bague externe (18) fixée à l'enveloppe (11),
un manchon (16) disposé à l'intérieur de l'enveloppe (11) sur l'autre terminaison de l'arbre de rotation (12) et mobile dans la direction axiale de l'arbre de rotation (12), et
un palier de côté libre (14) possédant une bague interne (24) en prise externe avec l'autre terminaison de l'arbre de rotation (12), ainsi qu'une bague externe (23) en prise interne avec le manchon (16), **caractérisé en ce que**
un passage de refroidissement (40), autorisant un milieu de refroidissement à circuler à travers celui-ci, est formé entre la surface périphérique externe (16b) du manchon (16) et la surface périphérique interne (33a) de l'enveloppe (11), les surfaces périphérique externe et interne (16b, 33a) se trouvant en face l'une de l'autre, et **caractérisé en ce que**
le passage de refroidissement (40) inclut de multiples rainures (41) annulaires formées dans la surface périphérique externe (16b) du manchon (16) ou dans la surface périphérique interne (33a) de l'enveloppe (11) et disposées côte à côte dans la direction axiale, ainsi qu'une fente (42) formée au moins dans un emplacement situé entre les rainures (41) annulaires se joignant mutuellement afin de permettre aux rainures (41) de communiquer l'une avec l'autre.

2. Appareil formant broche principale (10) selon la revendication 1, **caractérisé en ce que** :
un orifice d'alimentation (51), configuré pour délivrer le milieu de refroidissement, est ouvert en direction de la rainure (41) annulaire située sur une première terminaison dans la direction axiale, et
un orifice d'évacuation (52), configuré pour évacuer le milieu de refroidissement, est ouvert en direction de la rainure (41) annulaire située sur l'autre terminaison dans la direction axiale.

3. Appareil formant broche principale (10) selon la revendication 1 ou la revendication 2, **caractérisé en ce que** :
des éléments élastiques (45) annulaires, configurés pour assurer une étanchéité au liquide entre la surface périphérique externe du manchon (16) et la surface périphérique interne de l'enveloppe (11), sont disposés sur les deux côtés dans la direction axiale du passage de refroidissement (40)

4. Appareil formant broche principale selon l'une quelconque des revendications 1 à 3, **caractérisé en ce que** :
des pièces chanfreinées sont formées dans les deux bordures terminales de la surface périphérique externe (16b) du manchon (16) ou dans les deux bordures terminales de la surface périphérique interne (33a) de l'enveloppe (11).

5. Appareil formant broche principale (10) selon l'une quelconque des revendications 1 à 4, **caractérisé en ce que** :
la surface de paroi latérale de la rainure (41) annulaire est inclinée par rapport à une direction perpendiculaire à la direction axiale.
